# EUROPEAN PATENT SPECIFICATION

(11) **EP 2 969 965 B1**
(45) Date of publication and mention of the grant of the patent: **05.08.2020**
(21) Application number: 14779165.1
(22) Date of filing: 07.03.2014
(51) Int. Cl.: C02F 1/28, C02F 1/58, B01J 20/32, B01J 20/28, B01J 20/20, C02F 101/30, C02F 101/36

(54) **REMOVAL OF ORGANIC COMPOUNDS AND CHLORAMINE FROM AQUEOUS SOLUTIONS**
ENTFERNUNG VON ORGANISCHEN VERBINDUNGEN UND CHLORAMIN AUS WÄSSRIGEN LÖSUNGEN
ÉLIMINATION DE COMPOSÉS ORGANIQUES ET DE CHLORAMINE DANS DES SOLUTIONS AQUEUSES

(30) Priority: 12.03.2013 US 201361777017 P
(43) Date of publication of application: 20.01.2016
(73) Proprietor: 3M Innovative Properties Company, St. Paul, MN 55133-3427 (US)
(72) Inventor: STOUFFER, Mark R., Saint Paul, Minnesota 55133-3427 (US); PEMBERTON, Eric C., Saint Paul, Minnesota 55133-3427 (US); SIEDLE, Allen R., Saint Paul, Minnesota 55133-3427 (US)
(74) Representative: Vossius & Partner Patentanwälte Rechtsanwälte mbB
(86) International application number: PCT/US2014/021670
(87) International publication number: WO 2014/164275

(56) References cited:
- WO-A1-2012/102610
- DE-U1- 9 312 280
- US-A- 5 338 458
- US-A1- 2003 209 498
- US-A1- 2011 296 991
- US-A1- 2013 023 405
- Anonymous: "Water Quality & Health Council - Drinking Water and Health Newsletter", , 1 January 2016 (2016-01-01), XP055284992, Retrieved from the Internet: URL:http://www.waterandhealth.org/newslett er/pool_health.html [retrieved on 2016-06-30]

## Description

### TECHNICAL FIELD

A filtration medium comprising material with the ability to remove both chloramine and organic compounds from aqueous solutions is described along with methods of removal.

### SUMMARY

There is a desire to provide a filtration medium, which is less expensive, more efficient, and/or has a higher capacity for the removal of chloramine and organic compounds than currently available filtration media. In some instances, it is desirable to identify filtration media that is able to be used effectively in applications requiring high throughput and short contact time between the aqueous stream and the filtration bed.

The present invention provides a method of removing chloramine and organic compounds from an aqueous solution comprising: providing an aqueous solution comprising chloramine and an organic compound; and contacting the aqueous solution with a medium comprising a porous carbon substrate, wherein the porous carbon substrate comprises at least 6.0 % to 10 % by mass of sulfur, wherein the sulfur is covalently-bound to the carbon substrate.

Preferably, the method comprises: contacting the aqueous solution comprising at least 0.5 ppm of chloramine and an organic compound with the medium
and collecting the eluate, wherein the eluate comprises less than 0.1 ppm of chloramine.

Further, the method preferably comprises: preparing the medium
by thermal treatment of (i) the surface of a carbonaceous solid and (ii) a sulfur-containing reactant compound; and contacting the medium with the aqueous solution comprising chloramine and an organic compound, wherein after contact with the medium, the aqueous solution has a decreased amount of chloramine and a decreased amount of the organic compound.

The above summary is not intended to describe each embodiment. The details of one or more embodiments of the invention are also set forth in the description below. Other features, objects, and advantages will be apparent from the description and from the claims.

### DESCRIPTION OF THE FIGURES

Fig. 1 is a chart of the amount of chloramine in the effluent versus gallons (1 gallon ≈ 3.8 L) treated using carbon block made with Carbon Substrates A and B, and Example 1; and
Fig. 2 is a chart of the amount of chloroform in the effluent versus gallons treated using carbon block made with Carbon Substrates A and B, and Example 1

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B).

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

Municipal water supplies are purified or treated to produce water deemed safe for human consumption. Physical (e.g., filtration, distillation), biological (e.g., slow sand filters), and chemical processes (e.g., chlorination) may all be used to provide water meeting a certain standard. Chloramine is now being commonly used in low concentrations as a secondary disinfectant in municipal water distribution systems as an alternative to chlorination with free chlorine. However, concerns over taste and odor of chloramine treated water have led to an increase in the demand for water filters with chloramine removal capabilities.

A number of activated carbon particles having catalytic activity have been used to remove chloramine from aqueous streams. For example, U.S. Pat. No. 5,338,458 (Carrubba et al.) discloses an improved process for the removal of chloramine from gas or liquid media by contacting the media with a catalytically-active carbonaceous char. U.S. Pat. No. 6,699,393 (Baker et al.) shows improved chloramine removal from fluid streams, when the fluid stream is contacted with an activated carbon, which has been pyrolyzed in the presence of nitrogen-containing molecules, versus a catalytically-active carbonaceous char. WO Publ. No. 2011/125504 (Hitomi et al.) discloses an activated carbon having high catalytic activity containing 1.40-4.30 mass % oxygen, 0.90-2.30 mass % nitrogen, 0.05-1.20 mass % sulfur, and 0.40-0.65 mass % hydrogen, which is said to effectively break down chloramines. Hitomi et al. discloses that if the amounts of these elements are too high, the catalytic activity of the activated carbon will be diminished.

Recently, Applicants have discovered carbon-based filtration media that are less expensive, and/or more efficient at the removal of chloramine than currently available filtration media. Furthermore, this filtration media can be used effectively in high throughput applications, which have short contact time in the filtration bed.

It has now been discovered that in addition to the removal of chloramine, this carbon-based filtration media can be tuned to remove other contaminants in the aqueous streams, such as organic compounds, enabling a single filtration medium to remove multiple classes of impurities, in this case, chloramine and organic compounds.

Organic compounds, specifically, both volatile and non-volatile organic molecules are a contaminant found in drinking water supplies, which are desirably removed. Common organics found in drinking water supplies include disinfection by-products such as trihalomethanes, pesticides, herbicides, pharmaceutical compounds and gasoline components (such as benzene, MTBE, etc). These organic contaminants can co-exist in drinking water with chloramine. Typically, these organic contaminants are present in trace amounts (e.g., from a few parts per billion to hundreds of part per billion and in some cases, for instance, in the case of pharmaceutical compounds, part per trillion levels).

There is, therefore, a desire to have a media that can remove both chloramine and organic compounds. The objective of the present disclosure is to provide such a medium, and preferably provide a medium having high capacity for removal of both chloramine and organic compounds.

In the present disclosure, a reactant compound comprising sulfur and a carbon substrate are contacted and exposed to thermal treatment to form the filtration medium of the present disclosure.

### Reactant Compound

The reactant compound used to prepare the filtration medium of the present disclosure comprises sulfur. In embodiment, the reactant compound is a sulfur-containing reactant compound, or a sulfur and nitrogen-containing reactant compound. As used herein, a sulfur-containing reactant compound refers to any reactant containing sulfur, which can include elemental sulfur. In one embodiment, additional compounds may be added, such as for example, nitrogen-containing reactant compounds or oxygen. In one embodiment, the reactant compound may be a metal salt. In another embodiment, the reactant compound does not comprise a metal salt.

In one embodiment, the reactant compound has a molecular weight of no more than 800, 600, 500, 400, or even 200 grams/mole. In one embodiment, the reactant compound has a molecular weight of at least 32, 50, or even 100 grams/mole. The molecular weight of the compound needs to be appropriate for the nature of the carbon substrate used.

### Sulfur-containing Reactant Compound

WO Appl. No. US2012/0525 02 discloses the use of sulfur-containing compounds such as elemental sulfur, SO₂, SOCl₂, SO₂Cl₂,CS₂, COS, H₂S, and ethylene sulfide and sulfur analogs of epoxides, which are thermally treated with a carbon substrate.

WO Appl. No. US2012/070300 discloses the use of metal sulfides, which are thermally treated with a carbon substrate. A metal sulfide comprises a metal chemically combined with sulfur and further can optionally include other elements such as oxygen or carbon. The metals of the metal sulfide refers to chemical elements that are located in columns 3-12 and rows 4-6 in the periodic table of the elements; and also elements 57-71, known as the lanthanides. Exemplary metals of the metal sulfide include: copper, iron, manganese, silver, zirconium, niobium, molybdenum, tungsten, and combinations thereof.

Exemplary metal sulfides include: copper sulfide, iron sulfide, manganese sulfide, zirconium sulfide, zinc sulfide, niobium sulfide, molybdenum sulfide, and tungsten sulfide and oxysulfides of these metals, such as molybdenum oxysulfide.

WO Appl. No. US2012/069414 discloses the use of metal salts (including metal salts or metal complexes) comprising a sulfur-containing anion. The sulfur-containing anions may comprise an anion selected from at least one of a sulfate, sulfamate, sulfite, bisulfate, bisulfite, and/or thiosulfate ion. The metal portion of the metal salt may include any metal, however, metals that are acceptable for presence in drinking water are preferred. Exemplary metals include: copper, iron, silver, and manganese. Exemplary metal salts include: manganous sulfate, copper sulfate, chromium sulfate, and combinations thereof.

In one embodiment, the sulfur-containing reactant compound is a thiometallate or an oxythiometallate, wherein a thiometallate includes at least one of: a salt of MS₄⁻², MO₂S₂²⁻, and MOS₃²-, wherein the metal, M, is molybdenum or tungsten. Exemplary salts include: (NH₄)₂MS₄, (NH₄)₂MO₂S₂, and (NH₄)₂MOS₃, where M is Mo or W, which are water soluble.

### Sulfur and Nitrogen-containing Reactant Compound

US Prov. Pat. Appl. No. 61/699324, filed 11 Sep 2012 discloses the use of sulfur and nitrogen-containing salts. In one embodiment, the reactant compound is a salt is represented by the formula [C]^{+y}ₓ[A]^{-x}_{y}, wherein [C] is a cation; [A] is an anion; and x and y are independently at least 1. These salts include at least one sulfur atom and at least one nitrogen atom.

In one embodiment, the cation [C] is a conjugate acid of a nitrogen-containing base and contains at least one nitrogen atom. Exemplary cations include: ammonium and alkylated or arylated derivatives thereof (e.g., (NH₄)⁺, (NH₃CH₃)⁺, etc.), guanidinium, imidazolium, morpholinium, anilinium, thiomorpholinium, pyridinium, and combinations thereof. In another embodiment, the cation [C] contains at least one sulfur atom. Exemplary cations include: trimethylsulfonium, trimethylsulfoxonium, and combinations thereof. In yet another embodiment, the cation [C] contains at least one sulfur atom and at least one nitrogen atom. An exemplary cation includes phenothazinium.

In one embodiment, the anion [A] contains at least one sulfur atom. Exemplary anions include: sulfate, bisulfate, sulfite, bisulfate, polysulfide, sulfamate, polythionates [i.e. Sₙ(SO₃)₂²⁻], and combinations thereof. In another embodiment, the anion [A] contains at least one nitrogen atom. Exemplary anions include: cyanate, guanidine, imidazole, pyridine, triazole, and combinations thereof. In yet another embodiment, the anion [A] contains at least one sulfur atom and at least one nitrogen atom. Exemplary anions include: thiosulfate, thiocyanate, and combinations thereof.

In one embodiment, the salt, [C]^{+y}ₓ[A]^{-x}_{y}, may be a metal containing salt, e.g., potassium thiocyanate or sodium thiocyanate.

In another embodiment, the reactant compound containing both sulfur and nitrogen is not a salt. Exemplary reactant compounds include: thiomorpholine, phenothiazine, 2-mercaptopyridine, thiourea, and combinations thereof.

### Additional Compounds

In addition to the sulfur-containing reactant compound and/or the sulfur- and nitrogen-containing reactant compound used in the thermal treatment with the carbon substrate, additional compounds such as a nitrogen-containing reactant compound and/or an oxygen-containing reactant compound may also be used to achieve the medium of the present disclosure.

WO Appl. No. US2012/069414 discloses the use of metal salts (including metal salts or metal complexes) comprising a nitrogen-containing oxyanion to introduce a metal into the reaction product. Metals that are acceptable for presence in drinking water are preferred.

In one embodiment, oxygen may also be included in addition to the sulfur- and/or sulfur-and nitrogen-containing reactant compound.

In one embodiment, the oxygen may be part of the sulfur- and/or the sulfur- and nitrogen-containing reactant compound.

In one embodiment, the surface of the carbon substrate comprises oxygen. The carbon substrate, as received, may contain chemically significant amounts of oxygen attached to surface carbon atoms. For example, according to X-ray photoelectron spectroscopic (XPS) analysis, granular activated carbon available under the trade designation "RGC" by Mead Westvaco Corp, Richmond, VA contains about 2.9 atomic percent of oxygen. This amount of oxygen may be sufficient for the present disclosure but, when higher amounts of surface oxygen are desired, additional oxygen may be incorporated into the carbon substrate.

In one embodiment, oxygen may be added to the carbon substrate before exposure to the sulfur- and/or nitrogen-containing reactant compound. For example, the carbon substrate can be heated in air or treated with aqueous nitric acid, ammonium persulfate, ozone, hydrogen peroxide, potassium permanganate, Fenton's Reagent, or other well known oxidizing agents.

In another embodiment, additional oxygen can be incorporated into the medium of the present disclosure by carrying out the thermal treatment between the carbon substrate and the sulfur- and/or sulfur- and nitrogen-containing reactant compound in the presence of air or water. The amount of air used must be limited to prevent combustion of the carbon. Additional oxygen may also be supplied by addition of water or steam, which can be added during the heating reaction or may be present on the surface of the carbon substrates, such as in the case of high surface area carbonaceous materials, particularly hydrophilic oxidized carbons, which chemisorb water. Oxygen may be added during the heating reaction in the form of dioxygen, sulfur dioxide, carbon dioxide, or combinations thereof.

In addition to adding an oxygen source during thermal treatment of the carbon substrate and the sulfur- and/or sulfur-and nitrogen-containing reactant compound, in an alternative embodiment, the thermal treatment is conducted in the absence of added oxygen.

### Carbon Substrate

The carbon substrate may be a granular material, a powder material, a fiber, a tube, a web or a foam.

The morphology of the carbon substrate is not particularly limited and may include a non-particulate, a particulate, or an aggregate. A non-particulate carbon substrate is a support that is not composed of discernible, distinct particles. A particulate carbon substrate is a support that has discernible particles, wherein the particle may be spherical or irregular in shape (including e.g., non-spherical, cubic, faceted particles, and/or other geometric shapes) and has an average diameter of at least 0.1, 1, 5, 10, 20, or even 40 micrometers (µm) to at most 75 µm, 100 µm, 500 µm, 1 millimeter (mm), 2 mm, 4mm, 6.5 mm, or even 7 mm. An aggregate (or a composite) is formed by the joining or conglomeration of smaller particles with one another or with larger carrier particles or surfaces. The aggregates may be free standing (self-supporting against gravity).

Typically, the morphology of the carbon substrate will be selected based on the application. For example, particulate with a large particle size is desirable when the medium of the present disclosure is used in applications requiring low pressure drops such as in beds through which gases or liquids are passed. In another example, particle sizes of about 20 to 200 µm may be preferable when used in a carbon block monolith.

The size of the pores of the carbon substrate can be selected based on the application. The carbon substrate may be microporous carbon (having pore widths smaller than 2 nanometers), macroporous carbon (having pore widths between 2 and 50 nanometers), mesoporous carbon (having pore widths larger than 50 nm), or a mixture thereof.

In one embodiment, the carbon substrate is comprised of activated carbon, in other words carbon that has been processed to make it highly porous (i.e., having a large number of pores per unit volume), which thus, imparts a high surface area.

In one embodiment, it is preferable for the carbon substrate is porous. Preferably the carbon substrate has a high surface area (e.g., at least 100, 500, 600 or even 700 m²/g; and at most 1000, 1200, 1400, 1500, or even 1800 m²/g based on BET (Brunauer Emmet Teller method) nitrogen adsorption). High surface areas may be made available using a highly porous carbon substrate such as an activated carbon substrate.

Activated carbons may be generated from a variety of materials, however most commercially available activated carbons are made from peat, coal, lignite, wood, and coconut shells. Based on the source, the carbon can have different pore sizes, ash content, surface order, and/or impurity profiles. For example, coconut shell-based carbon has predominantly a microporous pore size, whereas a wood-based activated carbon has a predominately mesoporous or macroporous pore size. For example, coconut shell- and wood-based carbon typically have ash contents less than about 3% by weight, whereas coal-based carbons typically have ash contents of 4-10% by weight or even higher.

In one embodiment, the porous carbon substrate used in the present disclosure is predominately microporous, meaning that 65, 75, 80, 85, 90, 95, or even 99% of the pores of the carbon substrate are microporous, however some of the pores may be larger than microporous.

Commercially available carbon substrates include: activated wood-based carbon available under the trade designation "NUCHAR RGC", by Mead Westvaco Corp, Richmond, VA; wood-based carbon available under the trade designation "AQUAGUARD" by Mead Westvaco Corp; activated coconut shell-based carbon available under the trade designation "KURARAY PGW" by Kuraray Chemical Co., LTD, Okayama, Japan; and coal-based carbon available under the trade designations "CARBSORB" and "FILTRASORB" by Calgon Carbon Corp., Pittsburgh, PA.

### Thermal Treatment

Reactions of elemental carbon typically exhibit large activation energies and so are conducted at high temperature. Reactions used to introduce the reactant compounds into the carbon substrate surface may be conducted at a temperature sufficient to thermally decompose the sulfur chemical species (and additional reactant species, if present) as well as enable their reaction with the carbon substrate. Exemplary temperatures include at least 200, 250, 300, 400, or even 500°C; and at most 650, 700, 800, 900, 1000, 1200, or even 1400 °C. The resulting product herein is referred to as the reaction product or medium.

Generally the temperature at which to conduct the thermal treatment may be determined, by first analyzing the reactant compound by differential thermal analysis/thermal gravimetric analysis (DTA/TGA) performed under controlled conditions (atmosphere and heating rate) to determine its thermal decomposition behavior. Then trials may then be performed by heat treating the carbon substrate and the reactant compound at various temperatures beginning with the onset temperature of decomposition to determine at what point and under what conditions (temperature, time, and atmosphere) the most active material is formed.

The thermal treatment may occur in an air environment. However, to control combustion, sources of oxygen, such as air or water, may be excluded (e.g., by pulling a vacuum) or replaced by an inert gas such argon or nitrogen in which the oxygen concentration is less than 2000 ppm (parts per million), 200 ppm, or even less than 50 ppm.

The reactant compound may be used in the solid, liquid, or gas form. A single reactant compound may be used or more than one reactant compound may be used (for example, a sulfur-containing reactant compound and a nitrogen-containing reactant compound). Reaction temperatures, which are above the boiling point of the reactant compound(s) may be used.

In one embodiment, the reactant compound(s) may be combined with the carbon substrate by dry mixing and then exposed to the thermal treatment (heated). The amount of reactant compound added to the carbon support is determined through experimentation to yield sufficient sulfur (and optionally nitrogen and/or oxygen) present in the end product to produce an active removal material.

In another embodiment, the reactant compound(s) may be melted or dissolved or dispersed in a solvent (e.g., water or methanol or mixtures of solvents) and the liquid is used to wet the carbon substrate, impregnating the carbon substrate with the reactant compound. Such impregnation can be accomplished using simple techniques, such as spraying the reactant compound-containing solution onto the carbon substrate or melting the reactant compound and contacting it with the carbon substrate. When forming a solution using a solvent, the reactant compound is dissolved in the solvent to its solubility limit to maximize the amount of sulfur and/or nitrogen present, although lesser amounts may be used so long as there is sufficient sulfur and/or nitrogen present in the end product to produce an active removal material.

Then, the impregnated carbon substrate is heated to generate the media of the present disclosure. The decomposition of the reactant compound on the surface of the carbon substrate is thought to produce a reactive sulfur and optionally a reactive nitrogen species. It is thought that the impregnation of the carbon substrate with the reactant compound would enable a more evenly dispersed reactive surface on the carbon substrate, yielding a more uniform and better performing medium.

In thermal treatment with a metal salt a thermolysis process can be used, which involves heating a metal salt at or above the temperature at which the metal salt begins to lose metal-bound water, if present, and at which the salt portion of the compound begins to decompose. As used herein a "thermolysis product" refers to a product that results from the dissociation or decomposition of a compound by heat. This thermolysis process is believed to change the nature of the metal salt to a material having a different stoichiometry and composition and different chemical properties, wherein at least a portion of the salt is thermally decomposed and is removed by volatilization as a gas.

Described below are specific embodiments of thermal treatment to generate the reaction product disclosed herein.

In one embodiment, a carbon substrate is impregnated with a reactant compound comprising both sulfur and nitrogen (e.g., ammonium sulfate, ammonium hydrogen sulfite and ammonium thiosulfate) and then thermally treating impregnated carbon under a nitrogen atmosphere to a temperature above the decomposition point of the reactant compound and preferably higher than about 445°C, 500°C, 550°C, or even 800°C, followed by cooling under nitrogen.

In one embodiment, a carbon substrate is treated with a sulfur-containing reactant compound (e.g., elemental sulfur, H₂S, SO₂, and ammonium sulfur-containing compounds) at temperatures of 550 °C or higher. Elemental sulfur may be preferable, as a sulfur source because it may be used in the absence of solvent and without need for high pressures of gas.

In one embodiment, a reaction product comprising a metal sulfide may be prepared by treating a metal oxide supported on a carbon substrate with a sulfur source

In another embodiment, a carbon substrate with a metal carbonyl is heated in the presence of sulfur-containing reactant compound.

In another embodiment, a carbon substrate comprising a thiometallate or oxythiometallate is thermally decomposed to form a reaction product of the present disclosure.

### Reaction Product

The reaction product of the carbon substrate and the reactant compound comprising sulfur is referred to herein interchangeable as the reaction product or medium.

The reaction product of the present disclosure may be obtained via solid-gas (or solid-vapor) chemistry. In certain reactions of this class only the outer portions of the carbon substrate are exposed to the reactive gas because diffusion of the reactant compound into the inner pores of the carbon substrate can be slow relative to the treatment time. Additionally, in some cases, reactions can become self-limiting in that an overlayer of product inhibits inward diffusion of the gas. In such cases, the new compounds that form may be confined to regions near the surface and comprise a surface compound (e.g., 10 nanometers (nm) or less on the carbon substrate).

By using a solid-vapor thermal treatment process several advantages may be realized. Because the reaction may be solventless or at least free of organic solvent, no drying operation is needed to isolate the product. Further, there are generally no non-volatile by-products that remain to clog small pores in the solid. If no solvent is used, the process as described herein can be envisioned to run as a continuous process, which can reduce cost and/or increase throughput. The solid-vapor process of this disclosure permits penetration of small molecule reactants into micropores and niches formed by highly irregular surfaces. This results in an advantageous, even distribution of sulfur and/or nitrogen species.

In another embodiment, the reactive compound is melted, dissolved in a liquid, or suspended in solution and the resulting liquid is used to impregnate the carbon substrate. In this embodiment, the reactive species is dispersed throughout the carbon substrate and is thus able to react with the carbon substrate in the thermal treatment yielding a uniformly treated substrate. Advantageously, reactive species that are not easily vaporized or are fine powders can be used. Further, because the reactive compound is impregnated into the carbon substrate as a liquid without the concern of gas diffusion, larger carbon substrates can be uniformly treated.

When the carbon substrate is a large particle, a core-shell structure results, where the core is the carbon substrate, which is covered by a shell or second layer comprising the reaction product resulting from the thermal treatment of the reactant compound with the carbon substrate.

Because the reaction disclosed herein is a surface reaction, when the carbon substrate is in the form of small particles with high surface area (e.g., RGC powder nominally -325 mesh, having a nominal surface area of 1400-1800 m²/g), then the surface and interior of the particle may become coextensive. In one instance there may be no apparent chemical distinction between the outer surface and the interior of the particle. In another instance, the sulfur and/or nitrogen content on the bulk can approach or even exceed that on the surface.

In one embodiment of the present disclosure, the carbon of the carbon substrate, and the sulfur, and optionally the nitrogen, and/or oxygen (if present), chemically interact with one another, meaning, that these elements may be combined chemically (i.e., covalent chemical bonding between contiguous elements) or there may be weaker interactions between non-contiguous elements, such as hydrogen bonding. In the present invention, the sulfur is covalently bound to the carbon substrate.

In one embodiment, when the reaction product comprises sulfur, at least 15%, 20%, 25%, 30%, or even 50% of the sulfur in the reaction product is in an oxidation state higher than 0. For example in a +1, +2, +4, or even +6 oxidation state. Because the reaction product of the present disclosure comprises at least 1.5% by mass of sulfur, in one embodiment, at least 0.2%, 0.5%, or even 1% by mass of the medium comprises sulfur in an oxidation state higher than 0 based on XPS surface analysis.

Because not all of the sulfur (and/or nitrogen, if present) from the reactant compound is incorporated into the carbon substrate surface (e.g., some may be converted to COS or H₂S), it may be important to analyze the resulting composition to determine the atom fraction of carbon, oxygen, sulfur, and nitrogen on the carbon substrate surface of the medium.

If the carbon substrate is highly porous, the reaction product of the reactant compound and the carbon substrate can be analyzed by combustion analysis to determine how much carbon, hydrogen, nitrogen, and sulfur, are present.

In one embodiment, the medium of the present disclosure comprises carbon, and sulfur wherein the sulfur content of the medium is at least 1.5, 2.0, 3.0, 4.0, 6.0, 8.0, or even 10.0 mass % based on the total mass of the reaction product. In the present invention, the porous carbon substrate comprises 6.0 % to 10.0 % by mass of sulfur.

In one embodiment, the medium of the present disclosure comprises carbon and nitrogen wherein the nitrogen content is greater than 0.5, 1.0, 1.5, 2.0, 2.4, 2.5, 2.7, 3.0, 4.0, 5.0, 7.0, or even 10.0 mass % nitrogen based on the total mass of the reaction product.

In one embodiment, the medium of the present disclosure comprises more than 4.0, 4.5, 5.0, 7.0, 9.0, 10.0, 12.0, 15.0, or even 22.0 mass % of the sum of nitrogen and sulfur based on the total mass of the reaction product. In the present invention, the sum of nitrogen and sulfur based on the total mass of the reaction product is preferably greater than 6.5 % by mass, the porous carbon comprising 6.0 % to 10 % by mass of sulfur.

In one embodiment, the medium of the present disclosure is substantially free of hydrogen, comprising less than 0.40, 0.30, 0.20, 0.10, 0.05, or even 0.01 mass % hydrogen based on the total mass of the reaction product.

In one embodiment, the medium of the present disclosure is substantially free of metals, in other words, comprising less than 1, 0.5, 0.1, or even 0.05 mass % of metal based on the total mass of the reaction product.

In one embodiment, metals (such as calcium, magnesium, iron, etc.) may be present in low levels in the media of the present disclosure due to low levels of metals intrinsic to plant-derived materials such as carbons made from nut shells or coal.

In one embodiment, the medium of the present disclosure comprises CNₚSᵣ, wherein p and r are independently greater than 0. In one embodiment, p can be greater than 0.004, 0.008, 0.013, 0.020, 0.025, 0.035, 0.045, 0.065, or even 0.10, and r can be greater than 0.004, 0.006, 0.008, 0.015, 0.025, 0.035, or even 0.42.

In one embodiment, the medium of the present disclosure comprises COₓS_{y}, where in one embodiment, x is 0 or is at least 0.005, 0.01, 0.02, 0.03, 0.04, or even 0.05; and at most 0.07, 0.08, 0.09, 0.1, 0.12, 0.15, or even 0.2; and y is at least 0.001, 0.005, 0.01, 0.02, 0.03, 0.04, 0.05, or even 0.06; and is at most 0.12, 0.14, 0.15, 0.16, 0.18, 0.2, 0.22, 0.25, 0.3, 0.35, or even 0.4. In one embodiment, the carbon substrate has a surface consisting essentially of COₓS_{y}, meaning that the surface necessarily includes carbon, oxygen, and sulfur and may also include other atoms so long as the other atoms do not materially affect the basic and novel properties of the invention. In other words, besides carbon, oxygen, and sulfur, the surface of the substrate comprises less than 10% or even less than 5 % total of other atoms. These other atoms may originate in the starting materials and/or the atmosphere used during the thermal treatment. Impurities are typically less than 5%, 2%, 1%, 0.1%, 0.05%, or even 0.01% of particular impurity atom based on the weight of the composition.

In one embodiment, the carbon, oxygen, and sulfur of the reaction product chemically interact with one another, meaning, that these elements may be combined chemically (i.e., covalent chemical bonding between contiguous elements) or there may be weaker interactions between non-contiguous elements, such as hydrogen bonding.

In one embodiment, the compositions of the present disclosure have high thermal stability. For example, with the carbon substrate comprising COₓS_{y}, significant weight loss under nitrogen has not been observed at temperatures up to 800°C, well above the boiling point of sulfur, indicating that these compositions are not mere physical mixtures of starting materials.

Based on the analysis of compositions of the present disclosure, in at least one embodiment, the sulfur and oxygen are combined chemically on the surface of the carbon substrate. The oxygen and carbon are an integral part of the surface of the carbon substrate and are not easily removed by heating to 400°C. The nature of the structure and bonding is complex. Carefully deconvoluted XPS (X-ray photoelectron spectroscopy) spectra of the carbon substrate comprising COₓS_{y} reveal that sulfur is in four different chemical environments with S2p_{3/2} binding energies of about 162.0, 164.3, 165.8 and 168.9 eV [C(1s) = 285.0 eV]. They therefore contain chemically combined sulfur in three formal valence states [S(VI), S(IV) and S(II)] and four different chemical environments. These chemical environments are: (1) S(VI) as in SO₄²⁻ or organic sulfones, C-SO₂-C (2) S(IV) as in organic sulfoxides, C-SO-C, (3) S(II) as in thiophene and (4) S(II) as in organic sulfides, C-S-C or disulfides, C-S-S-C.

In one embodiment, the reaction product has a bulk density of greater than 0.50, 0.57, 0.60, or even greater than 0.65 g/cc.

In one embodiment, the reaction product has an ash content of less than 4% or less than 3%, or even less than 2%.

Because sulfur is associated with a rotten egg smell, and the present disclosure is directed toward use in treatment of aqueous solutions (e.g., drinking water), one may be dissuaded from using sulfur-containing in materials for treatment of drinking water. However, advantageously, although the reaction products disclosed herein comprise sulfur, and in some instances large amounts of sulfur (e.g., 10% by wt), the reaction products do not have a noticeable smell.

### Carbon block

In one embodiment, the reaction product is disposed in a matrix to form a filter. The matrix may be a web, a polymer-containing composite block, on the surface of a tube, or in another structure that enables aqueous solutions to pass therethrough. In one embodiment, the reaction product may be blended and compressed with a binder material, such as a polyethylene, e.g., an ultra high molecular weight polyethylene, or a high-density polyethylene (HDPE). In another embodiment, the reaction product may be loaded into web, such as a blown microfiber, which may or may not be compacted such as described in U.S. Publ. No. 2009/0039028 (Eaton et al.).

In one embodiment, the matrix, including the reaction product of the present disclosure, further comprises particles of titanium, in the form or oxides or silicates. These particles may be added to the matrix to improve removal of undesirable metals such as lead. Typically, these particles have a sizing of 20 to 50 microns.

The loading, expressed as weight of the reaction product by the total weight of the filter (comprising the reaction product, the matrix and additional additives), can vary depending on the matrix used. In one embodiment, the amount of reaction product comprises at least 10, 25, 40, 50, 60, 75, or even 80 %; at most 90, 92, 95, 97, or 99%, or even 100% mass of the filter. For example, when carbon blocks are used, the filter may comprise about 50-85% mass of the reaction product, while for a carbon loaded web, the filter may comprise about 80-95% mass of the reaction product.

In one embodiment, the reaction product is disposed in a fluid conduit (e.g., a housing or vessel comprising at least an inlet and an outlet), wherein the fluid conduit is fluidly connected to a fluid inlet and a fluid outlet. Such systems may include packed beds.

### Removal

The medium of the present disclosure may be used to remove chloramines and/or organic compounds from a fluid stream, particularly a liquid fluid stream, more specifically, an aqueous fluid stream.

Chloramines are formed from the aqueous reaction between ammonia and chlorine (hypochlorite). Thus, adding ammonia (NH₃) to a chlorination system converts chlorine to chloramines. Specifically, monochloramine, hereafter referred to as "chloramine," in low concentrations arise from the disinfection of potable water sources. In one embodiment, after contacting the aqueous solution with the medium of the present disclosure, as disclosed herein, the resulting aqueous solution comprises a reduced amount of chloramines.

Common organics found in drinking water supplies include disinfection by-products such as trihalomethanes, of which chloroform is an example. Chloroform is used by the National Sanitation Foundation NSF /ANSI standard 53 ("Drinking water Treatment Units, Health Effects") as a surrogate for volatile organic compound reduction claims. A measure of the removal capability of a filtration media for removal of volatile organic compounds is to challenge a filtration media with 300 ppb chloroform in water and measure the gallons treated until 15 ppb breakthrough is observed. In one embodiment, after contacting the aqueous solution with the medium of the present disclosure, as disclosed herein, the resulting aqueous solution comprises a reduced amount of organic compounds.

In the Applicants' previous filings, referenced above, it was found that thermally treating a carbon substrate in the presence of various reactants, such as sulfur containing compounds and/or sulfur- and nitrogen-containing compounds, resulted in materials that were active for chloramine removal. These materials were found to have similar or even higher activity for removal of chloramine from aqueous solutions than untreated activated carbon, including those commercially marketed for chloramine removal. Previously, wood-based carbon substrates were primarily investigated because (a) the best available chloramine removal carbon to date was a wood-based carbon and (b) it was thought that chloramine reduction was limited by pore diffusion (i.e., diffusion of chloramine into the carbon pores and counter diffusion of reaction products from the pores). Thus, wood-based carbon, having a larger pore size, was thought to be desirable.

However, in Applicants' studies, reaction products comprising carbon sulfides (CxSz) made from coconut shell-based carbon substrates showed chloramine removal kinetics and chloramine capacity as high as wood-based carbon substrates. Further, as will be shown in the Example below, the medium of the present disclosure retained it capacity for the removal of organic compounds, which are thought to be removed via adsorption into the pores of the carbon substrate. Thus, although not wanting to be limited by theory, it is believed that thermal treatment of the carbon substrate with reactant compound, do not substantially block the pores of the porous carbon substrate upon reaction.

In one embodiment, it has been discovered that reaction product made from thermal treatment of coconut shell-based carbon substrates and a reactant compound comprising sulfur provide improved capacity and/or reaction rates for both the removal of chloramine and organic compounds than current commercially available filtration media marketed specifically for chloramine removal, and/or filtration media made using the thermal treatments disclosed herein on wood-based carbon substrates.

The medium of the present disclosure reduces the amount of chloramine and organic compounds in an aqueous solution, when the solution is contacted with the medium. In one embodiment, the aqueous solution comprises from 3 ppm to less than 0.5 ppm chloramine. Upon contact with the medium, the aqueous solution has a reduced chloramine content to 0.1 ppm or less. For example, in one embodiment, the amount of chloramine is decreased by at least 70%, 75%, 80%, 85%, 90%, 95%, 99%, or even 100% when challenged with a solution comprising 3 ppm chloramine. In one embodiment, the aqueous solution comprises about 300 ppb organic compound, which upon contact with the medium, the aqueous solution has a reduced organic compound content of less than 15 ppb. For example, in one embodiment, the amount of organic compound is decreased by at least 70%, 75%, 80%, 85%, 90%, 95%, 99%, or even 100% when challenged with a solution comprising 15 ppb chloroform. In another embodiment, the aqueous solution comprises less than 1 ppb organic compound, which upon contact with the medium, the aqueous solution has a reduced organic compound content of less than 0.5 ppb. For example, in another embodiment, the amount of organic compound is decreased by at least 50%, 60%, 70%, 80%, 85%, 90%, 95%, 99%, or even 100% when challenged with a solution comprising 1 ppb chloroform.

In one embodiment, the thermal treatments disclosed herein improve the capacity of the carbon substrate to remove chloramine and/or chlorine. In one embodiment, the medium of the present disclosure has a high capacity for removing chloramine (e.g., at least 0.1 g/cc, or even 0.2 g/cc based on the amount of chloramine removed per volume of reaction product). In one embodiment, the filter media made using the medium of the present disclosure has a high capacity for removing organic compounds (e.g., at least 0.05 g/cc, 0.1 g/cc, or even 0.2 g/cc based on the amount of chloroform removed per volume of reaction product). The capacity, and thus throughput of water, is a key for designing a filter with an acceptably long service life.

Capacity (or service life) of the carbon block sample comprising the reaction product disclosed herein is reported as the throughput attained before the concentration of chloramines in the effluent rises above 0.5 mg/L. In one embodiment, the medium when challenged with 3 ppm chloramine, will have a capacity of at least 0.05, 0.1 or even 0.19 g chloramine per gram of the medium at 3 ppm for chloramine at an empty bed contact time of 9.5 sec.

In designing filtration media, it is also advantageous to have media that is able to quickly react with the contaminant of interest. It has been found that filtration media made using the reaction product disclosed herein can provide a fast reaction rate, and thus yields good performance for the removal of chloramines and/or organic compounds with empty bed contact times as low as 3 to 5 seconds. Empty bed contact time is defined as the volume of the filter in gallons divided by the water flow rate in gallons per second. The ability to quickly and effectively remove chloramines and/or organic compounds is a key to reducing the required size of filters. In many applications space is limited, so "miniaturizing" filter volume is a key for customer acceptance. Applications where space is limited include refrigerator filters, end of faucet filters, countertop filters, filters for portable and home dialysis systems, gravity flow devices (pitchers) and point-of-entry house filters. Therefore, the media disclosed herein can extend the range of applications where chloramine and organic compound removal from water is feasible and desirable for the customer. Currently, such filters for the above mentioned applications would be too large or too low in capacity to be practical for a broad range of users.

The reaction product as disclosed herein may be useful for the following applications: point-of-use or point-of-entry filters for home or commercial use, and filters for dialysis water for the removal of contaminants (such as chloramine, organic compounds, etc.) in aqueous streams.

The reaction product as disclosed herein may be used to not only remove chloramine and/or organic compounds, it may also be used to remove other contaminants as well. As shown in U.S. Appl. Nos. 61/777,013 and 61/777,010 both filed March 12, 2013 the reaction product can be used to remove mercury and/or chlorine. In some instances, the end-user may not know what contaminants are in their aqueous stream due to changes in the water supply, exposure of the aqueous solution to contaminants from a treatment source to the point of use. Thus, multiple filters, specific to each contaminant, may be needed. Having a filtration media that is able to remove a variety of contaminants may save on foot-print size and/or cost. In some instances, the treatment of the water supply may change, known or unknown to the end-user, and thus it would be advantageous to have a filtration media that does not need to be changed with changes that occurred upstream.

In one embodiment of the present disclosure, a method of removing various contaminants from an aqueous solution is provided comprising: providing an aqueous solution comprising at least two contaminants selected from: chloramine, chlorine, an organic compound (such as trihalomethanes, e.g., chloroform), and mercury; and contacting the aqueous solution with a medium comprising a porous carbon substrate, wherein the porous carbon substrate comprises at least 1.5 % by mass of sulfur, whereby the medium reduces the amount of the at least two contaminants.

In another embodiment, a medium is disclosed comprising carbon and sulfur, wherein the medium has the capability to remove at least one of: chloramine, free chlorine, mercury, and trihalomethane (exemplified by chloroform), wherein a composite carbon block filter comprising the medium and a binder has a filtration capacity of at least 5000 liters of water per liter of carbon block volume and wherein the filtration capacity is measured at about 2.4 sec (± 5%) empty bed contact time when tested according to the National Sanitation Foundation Standard 53 (for mercury and chloroform) and 42 (for chloramine and chlorine) protocols. For disclosure of the testing methods, refer to the Example Section below and the methods disclosed in U.S. Appl. Nos. 61/777,013 and 61/777,010 both filed March 12, 2013.

In another embodiment of the present disclosure, a medium for filtration of aqueous solutions is provided, wherein when tested at about 2.4 sec (± 5%) the empty bed contact time according to the National Sanitation Foundation Standard 53 and 42 protocols the medium comprises the following capacity: at least 0.05, 0.06, 0.07, 0.08, or even 0.1 g chloramine per gram of the medium when challenged with 3ppm chloramine, at least 0.5, 0.7, 0.8, or even 1g chlorine per gram of the medium when challenged with 2 ppm chlorine; at least 0.002, 0.003, 0.004, or even 0.0050 g organic compound per gram of the medium when challenged with 150 ppb organic compound (as measured by chloroform); and at least 0.002, 0.003, 0.004, 0.005 or even 0.007 g mercury per gram of the medium when challenged with mercury. For disclosure of the testing methods, refer to the Example Section below and the methods disclosed in U.S. Appl. Nos. 61/777,013 and 61/777,010 both filed March 12, 2013.

### EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials are commercially available, for example from Sigma-Aldrich Chemical Company; Milwaukee, WI, or known to those skilled in the art unless otherwise stated or apparent.

These abbreviations are used in the following examples: g = gram, hr = hour, in = inch, kg = kilograms, min = minutes, mol = mole; M = molar, cc = cm³, cm= centimeter, mm = millimeter, mL = milliliter, L = liter, N = normal, psi=pressure per square inch, and wt = weight.

### Methods

### Chloramine Test

The chloramine content of water samples was determined from the total chlorine content in the samples. Total chlorine (OCl⁻ and chloramines) concentration was measured by the DPD Total Chlorine Method, Hach Method 8167, which Hach Company claims to be equivalent to USEPA Method 330.5. The free chlorine (OCl-) concentration was periodically measured by the DPD Free Chloramine Analysis, Hach Method 8021, which Hach company claims is equivalent to EPA Method 330.5. Free chlorine was maintained at a negligible concentration (< 0.2 ppm), thus, the total chlorine analysis was considered a good approximation of the concentration of chloramines in the water. All reagents and the instruments were those described in the standard Hach Method and can be obtained from Hach Company, Loveland, CO.

### Chloramine Removal Test

Chloramine capacity in a flow-through system was evaluated by a flow through test method. A 3 mg/L aqueous chloramine test solution was prepared having: a pH of 7.6 ± 0.25; total dissolved solids of 200-500 mg/L; a hardness less than 170 mg/L as CaCO3; turbidity of less than 1 Nephelometric Turbidity Unit; and a temperature of 20 ± 3 °C. The chloramine concentration was controlled at 2.7 - 3.3 mg/L by the addition of a sodium hypochlorite solution and then addition of an ammonium chloride solution. The pH was controlled by adding sodium hydroxide as needed.

An end-capped carbon block sample (prepared as described below) was then placed into a standard filtration vessel that allowed radial flow from the outside to the inside of the filter media. The vessel was equipped with an inlet and outlet. The aqueous chloramine test solution was run through the filtration system at a flow rate of 0.49 L/min (0.13 gallons/minute). In this test, the water flow rate was held constant.

The aqueous chloramine test solution described above was flowed through the filtration system for 5 minutes to wet out the carbon block sample. After this, samples of the effluent (outflow from the carbon block sample) were taken periodically and the throughput in gallons was recorded. Effluent samples were analyzed for chloramine using the Chloramine Test described above. The chloramine effluent concentration was then plotted as a function of the aqueous chloramine test solution throughput. The maximum effluent chloramine concentration is 0.5 mg/L.

### Chloroform (Organic Compound) Removal Test

The capacity to remove organic compounds was evaluated by a flow-through test method using chloroform as a surrogate. A test solution of chloroform was prepared with an average chloroform concentration of 300 µg/L ± 30 µg/L.

An end-capped carbon block sample (prepared as described below) was placed into a standard filtration vessel that allowed radial flow from the outside to the inside of the filter media. The vessel was equipped with an inlet and outlet. The aqueous test solution was run through the filtration system at a flow rate of 0.49 L/min (0.13 gallons/minute). The water flow duty cycle was 15 min on / 15 min off and 16 hours per day.

The aqueous chloroform test solution described above was flowed through the filtration system for 5 minutes to wet out the carbon block sample. After this, samples of the effluent (outflow from the carbon block sample) were taken periodically and the throughput in gallons was recorded. Effluent samples were analyzed for chloroform using GC/MS and the chloroform effluent concentration was then plotted as a function of the aqueous chloroform test solution throughput. The maximum effluent chloroform concentration is 15 µg/L. The method detection limit for the chloroform was 0.15 ppb and the method limit of quantitation was 0.5 ppb.

### Combustion Analysis of Hydrogen, Nitrogen and Sulfur

The weight percent carbon, hydrogen, nitrogen and sulfur in a sample was measured by combustion using a LECO TruSpec Micro CHNS elemental analyzer, Laboratory Equipment Co. St. Joseph, MI. Briefly, the sample is placed in the instrument and purged of atmospheric gases. The sample is then heated to over 1000°C in the presence of oxygen to combust the sample. The sample is then passed through a second furnace for further oxidation, reduction, and particulate removal. The combustion gases are then passed through various detectors to determine the content of the carbon, hydrogen, nitrogen, and sulfur.

A sulfamethazine standard (>99%,from LECO) was diluted to make a calibration curve ranging from 1 mg to 2.6 mg sulfamethazine. The instrument is baselined with ambient air until the CHNS detectors stabilized. Then, 3-4 empty crucibles were measured and set as instrument blanks. Next, the sulfamethazine standards were analyzed to form a calibration curve. The absolute standard deviation of the sulfamethazine standard (acceptable precision for a pure homogeneous material) for the elements were: < +/- 0.3 wt % for hydrogen, < +/- 0.3 wt % for nitrogen and < +/- 0.3 wt. % for sulfur with a limit of detection of 0.10 wt % for each of the elements.

### Surface Analysis of Sample

Chemical states and elemental compositions of a sample were analyzed by X-ray photoelectron spectroscopy, using a Kratos Axis Ultra™ XPS system (Shimadzu Corp., Columbia, MD) at a base pressure bellow 10⁻⁹ Torr. The monochromatic AlKα (1486.6 eV) X-ray source was operated at 140 Watts (14 KV, 10 mA). Hemispherical electron energy analyzer operated at constant pass energy of 160 eV for survey and 20 eV for high resolution spectra. The binding energy (BE) scale was calibrated relative to the BE of C 1s peak. The spectra were acquired at 90 ° take-off angle with respect to the sample surface. The data processing was done with PHI MultiPak V8. 2B, 2006 and Casa XPS Version 2.3.16 Dev41 software. Surface compositions were calculated from measured photoelectron peak areas in survey spectra after correction for appropriate Scofield ionization cross sections. The reported overall atomic concentrations are mean values derived from the survey spectra collected at multiple randomly selected sample regions. The surface content of catalyst functional groups was determined by de-convolution/curve fitting analysis of C 1s, O 1s, N 1s and S 2p core level spectra. The curve fitting analysis was based on summed Gaussian/Lorentzian GL function and Shirley type background subtraction.

### Carbon Substrate A

Carbon Substrate A was a wood-based activated carbon (nominal 80x325 mesh, obtained from MeadWestvaco Specialty Chemicals, North Charleston, SC, under the trade designation "AQUAGUARD 325",) used as received without further treatment. Carbon Substrate A is currently commercially marketed as being specifically designed to control chloramine, chlorine, tastes, and odors in water. It is said to have unparalleled high chloramine capacity and is the catalytic carbon of choice in point of use water filters where chloramine reduction capacity is important. See product brochure "AQUAGUARD 200 and 325: Catalytic Activated Carbon" revised 06/2012.

### Carbon Substrate B

Carbon Substrate B was a coconut shell activated carbon (nominal 80x325 mesh, obtained from Kuraray Chemical, Osaka, Japan, under the trade designation "PGW-100MP"). It had a nominal 120 micron median particle size

### Example 1 Carbon Substrate

Carbon Substrate B was heated to 180 °C in a crucible and then elemental sulfur (0.2 g sulfur per gram carbon, obtained from Alfa Aesar, Ward Hill, MA, -325 mesh, 99.5%) was added with stirring. The sulfur melted and was incorporated into the Carbon Substrate B.

A loose fitting lid was placed on the crucible containing the carbon substrate-sulfur mix. The crucible was then placed in a nitrogen purged muffle furnace, equilibrated to 550 °C and held at that temperature for 30 minutes. The crucible was removed from the furnace and transferred to a nitrogen-purged container for cooling to near room temperature.

Example 1 was found to have 8.44 wt% sulfur, 0.12 wt% nitrogen, and the hydrogen was below the limit of detection when tested following the "Combustion Analysis of Hydrogen, Nitrogen and Sulfur" procedure above.

### Reference Example 2 Carbon Substrate

Example 2 was prepared as described in Example 1 above and tested by the "Surface Analysis" method above. Example 2 Carbon Substrate was found to comprise 91.1 atomic % carbon, 0.6 atomic % nitrogen, 2.1 atomic % oxygen and 5.3 atomic % sulfur. Of the 5.3 atomic percent sulfur on the surface of the sample: 7.4% was in the -2 oxidation state, 65.9% was in the 0 oxidation state, 13.4% was in the +2 oxidation state, 9.5% was in the +4 oxidation state and 3.8% was in the +6 oxidation state.

### Preparing Carbon Blocks Samples

40 cm³ of the selected carbon substrate (80x325 mesh nominal particle size) was added into a blender. The volume of the carbon was determined at the maximum uncompressed density. 40 cm³ of Ticona GUR 2126 ultra high molecular weight polyethylene (UHMWPE) powder (from Ticona Engineering Polymers, Florence KY) at its maximum uncompressed density was measured and placed into the blender. The carbon and UHMWPE were blended for 3 minutes. The mixture was then quantitatively transferred to a cylindrical shaped mold with a hollow cylindrical core having the dimensions of 1.35 in. (34.3 mm) outer diameter, 0.375 in. (9.5 mm) inner diameter, and 3.6 in. (91.4 mm) length. The mold was filled using an impulse filling as described in U.S. Pat. No. 8,206,627 (Stouffer et al.) to the maximum uncompressed density. The mold was covered and then heated in a convection oven at 180 °C for 50 minutes. After heating, the mold was immediately compressed with a piston to a fixed block length of 3.1 in. (78.7 mm.) The mold was cooled to room temperature and the resulting carbon block was removed from the mold. End caps were applied to the block using hot melt glue.

The carbon substrates of Example 1, Carbon Substrate A, and Carbon Substrate B were each individually made into carbon block samples following the procedure described above.

The carbon blocks were tested following the Chloramine Removal Test and the Chloroform Removal Test.

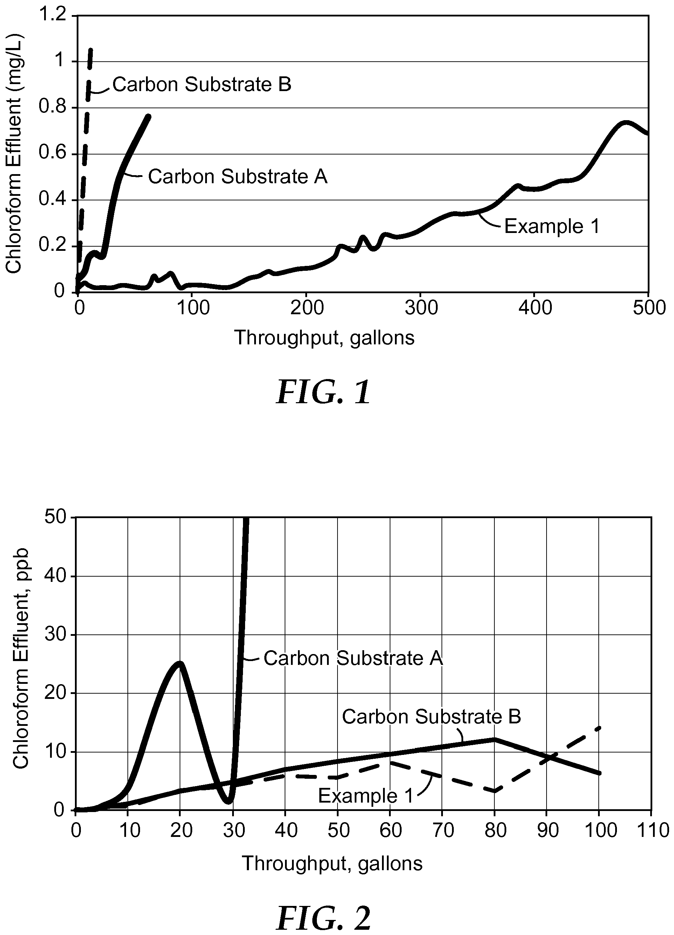

Shown in Fig. 1 is the amount of chloramine detected versus throughput in gallons for carbon blocks made with Example 1 and Carbon Substrates A and B. Capacity of the carbon block sample is reported as the throughput attained before the concentration of chloramines in the effluent rises above 0.5 mg/L. The water treatment capacity for chloramine of the carbon block with Example 1 carbon is about 1670 L (440 gallons), for the carbon block using carbon substrate A it is about 150 L (40 gallons), and for the carbon block using carbon substrate B it is less than 38 L (10 gallons).

Shown in Fig. 2 is the amount of chloroform detected versus throughput in gallons for carbon blocks made with Example 1 and Carbon Substrates A and B. Capacity of the carbon block sample is reported as the throughput attained before the concentration of chloroform in the effluent rises above 15 µg/L. The water treatment capacity for chloroform of the carbon block with Example 1 carbon is about 380 L (100 gallons), for the carbon block using carbon substrate A it is about 38 L (10 gallons), and for the carbon block using carbon substrate B it is about 380 L (100 gallons).

Foreseeable modifications and alterations of this invention will be apparent to those skilled in the art without departing from the scope of this invention as defined by the claims. This invention should not be restricted to the embodiments that are set forth in this application for illustrative purposes.

## Claims

1. A method of removing chloramine and organic compounds from an aqueous solution comprising:
providing an aqueous solution comprising chloramine and an organic compound; and
contacting the aqueous solution with a medium comprising a porous carbon substrate, wherein the porous carbon substrate comprises 6.0 % to 10.0 % by mass of sulfur, wherein the sulfur is covalently-bound to the carbon substrate.

2. The method of claim 1, wherein the porous carbon substrate is predominately microporous.

3. The method of any one of the previous claims, wherein the surface of the porous carbon substrate comprises a species of COₓS_{y}, wherein x is no more than 0.1, and y is 0.005 to 0.3.

4. The method of any one of the previous claims, wherein the porous carbon substrate further comprises nitrogen.

5. The method of any one of the previous claims, wherein the porous carbon substrate is an activated carbon.

6. The method of any one of the previous claims, wherein at least 0.2 % by mass of the medium comprises sulfur in an oxidation state higher than 0 based on XPS surface analysis.

7. The method of any one of the previous claims, wherein the medium has a bulk density of greater than 0.6 g/cc.

8. The method of any one of the previous claims, wherein the medium has an ash content less than 3%.

9. The method of any of the previous claims, wherein the medium is disposed within a matrix, wherein the matrix is a polymer matrix.

10. The method of claim 9, wherein the medium further comprises particles comprising titanium.

11. The method of any one of the previous claims comprising:
contacting the aqueous solution comprising at least 0.5 ppm of chloramine and an organic compound with the medium and collecting the eluate, wherein the eluate comprises less than 0.1 ppm of chloramine.

12. The method of claim 1, comprising:
preparing the medium by thermal treatment of (i) the surface of a carbon support and (ii) a reactant compound comprising sulfur; and contacting the medium with the aqueous solution comprising chloramine and an organic compound,
wherein after contact with the medium, the aqueous solution has a decreased amount of chloramine and a decreased amount of the organic compound.

13. The method of claim 12, wherein the reactant compound comprising sulfur is selected from at least one of: elemental sulfur, sulfur oxides, hydrogen sulfide, salts containing oxyanions of sulfur, and combinations thereof.

14. The method of any one of claims 12 or 13, wherein the thermal treatment is conducted at a temperature greater than 445°C in an inert atmosphere.

15. The method of any one of claims 12 to 14, wherein the amount of chloramine is decreased by at least 80% when challenged with a solution comprising 3 ppm chloramine.

## Patentansprüche

1. Ein Verfahren zum Entfernen von Chloramin und organischen Verbindungen aus einer wässrigen Lösung, umfassend:
Bereitstellen einer wässrigen Lösung, die Chloramin und eine organische Verbindung umfasst; und Inkontaktbringen der wässrigen Lösung mit einem Medium, das ein poröses Kohlenstoffsubstrat umfasst, wobei das poröse Kohlenstoffsubstrat 6,0 Massen-% bis 10,0 Massen-% Schwefel umfasst, wobei der Schwefel kovalent an das Kohlenstoffsubstrat gebunden ist.

2. Das Verfahren nach Anspruch 1, wobei das poröse Kohlenstoffsubstrat hauptsächlich mikroporös ist.

3. Das Verfahren nach einem der vorstehenden Ansprüche, wobei die Oberfläche des porösen Kohlenstoffsubstrats eine Spezies von COₓS_{y} umfasst, wobei x nicht größer ist als 0,1, und y 0,005 bis 0,3 ist.

4. Das Verfahren nach einem der vorstehenden Ansprüche, wobei das poröse Kohlenstoffsubstrat ferner Stickstoff umfasst.

5. Das Verfahren nach einem der vorstehenden Ansprüche, wobei das poröse Kohlenstoffsubstrat eine Aktivkohle ist.

6. Das Verfahren nach einem der vorstehenden Ansprüche, wobei mindestens 0,2 Massen-% des Mediums Schwefel in einer Oxidationsstufe höher als 0, basierend auf XPS-Oberflächenanalyse, umfasst.

7. Das Verfahren nach einem der vorstehenden Ansprüche, wobei das Medium eine Schüttdichte von mehr als 0,6 g/cm³ aufweist.

8. Das Verfahren nach einem der vorstehenden Ansprüche, wobei das Medium einen Aschegehalt von weniger als 3 % aufweist.

9. Das Verfahren nach einem der vorstehenden Ansprüche, wobei das Medium innerhalb einer Matrix angeordnet ist, wobei die Matrix eine Polymermatrix ist.

10. Das Verfahren nach Anspruch 9, wobei das Medium ferner Teilchen umfasst, die Titan umfassen.

11. Das Verfahren nach einem der vorstehenden Ansprüche, umfassend:
Inkontaktbringen der wässrigen Lösung, die mindestens 0,5 ppm Chloramin und eine organische Verbindung umfasst, mit dem Medium und Sammeln des Eluats, wobei das Eluat weniger als 0,1 ppm Chloramin umfasst.

12. Das Verfahren nach Anspruch 1, umfassend:
Herstellen des Mediums durch thermische Behandlung von (i) der Oberfläche eines Kohlenstoffträgers und (ii) einer reaktionsfähigen Verbindung, die Schwefel umfasst; und Inkontaktbringen des Mediums mit der wässrigen Lösung, die Chloramin und eine organische Verbindung umfasst,
wobei nach dem Kontakt mit dem Medium die wässrige Lösung eine verringerte Menge von Chloramin und eine verringerte Menge der organischen Verbindung aufweist.

13. Das Verfahren nach Anspruch 12, wobei die reaktionsfähige Verbindung, die Schwefel umfasst, aus mindestens einem der Folgenden ausgewählt ist: elementarem Schwefel, Schwefeloxiden, Schwefelwasserstoff, Salzen, die Oxyanionen von Schwefel enthalten, und Kombinationen davon.

14. Das Verfahren nach einem der Ansprüche 12 oder 13, wobei die thermische Behandlung bei einer Temperatur von mehr als 445 °C in einer inerten Atmosphäre durchgeführt wird.

15. Das Verfahren nach einem der Ansprüche 12 bis 14, wobei die Menge von Chloramin um mindestens 80 % verringert wird, wenn es einer Lösung, die 3 ppm Chloramin umfasst, ausgesetzt wird.

## Revendications

1. Procédé d'élimination de chloramine et de composés organiques d'une solution aqueuse comprenant :
la fourniture d'une solution aqueuse comprenant de la chloramine et un composé organique ; et la mise en contact de la solution aqueuse avec un milieu comprenant un substrat en carbone poreux, dans lequel le substrat en carbone poreux comprend 6,0 % à 10,0 % en masse de soufre, dans lequel le soufre est lié par covalence au substrat en carbone.

2. Procédé selon la revendication 1, dans lequel le substrat en carbone poreux est principalement microporeux.

3. Procédé selon l'une quelconque des revendications précédentes, dans lequel la surface du substrat en carbone poreux comprend une espèce de COₓS_{y}, où x n'est pas supérieur à 0,1, et y va de 0,005 à 0,3.

4. Procédé selon l'une quelconque des revendications précédentes, dans lequel le substrat en carbone poreux comprend en outre de l'azote.

5. Procédé selon l'une quelconque des revendications précédentes, dans lequel le substrat en carbone poreux est un charbon actif.

6. Procédé selon l'une quelconque des revendications précédentes, dans lequel au moins 0,2 % en masse du milieu comprend du soufre dans un état d'oxydation supérieur à 0 sur la base d'une analyse de surface XPS.

7. Procédé selon l'une quelconque des revendications précédentes, dans lequel le milieu a une masse volumique apparente supérieure à 0,6 g/cm³.

8. Procédé selon l'une quelconque des revendications précédentes, dans lequel le milieu a une teneur en cendres inférieure à 3 %.

9. Procédé selon l'une quelconque des revendications précédentes, dans lequel le milieu est disposé au sein d'une matrice, dans lequel la matrice est une matrice polymère.

10. Procédé selon la revendication 9, dans lequel le milieu comprend en outre des particules comprenant du titane.

11. Procédé selon l'une quelconque des revendications précédentes comprenant :
la mise en contact de la solution aqueuse comprenant au moins 0,5 ppm de chloramine et d'un composé organique avec le milieu et la collecte de l'éluat, dans lequel l'éluat comprend moins de 0,1 ppm de chloramine.

12. Procédé selon la revendication 1, comprenant :
la préparation du milieu par traitement thermique de (i) la surface d'un support en carbone et (ii) d'un composé réactif comprenant du soufre ; et la mise en contact du milieu avec la solution aqueuse comprenant de la chloramine et un composé organique,
dans lequel après contact avec le milieu, la solution aqueuse a une quantité diminuée de chloramine et une quantité diminuée du composé organique.

13. Procédé selon la revendication 12, dans lequel le composé réactif comprenant du soufre est choisi parmi au moins l'un parmi : du soufre élémentaire, des oxydes de soufre, du sulfure d'hydrogène, des sels contenant des oxyanions de soufre, et des combinaisons de ceux-ci.

14. Procédé selon l'une quelconque des revendications 12 ou 13, dans lequel le traitement thermique est effectué à une température supérieure à 445 °C dans une atmosphère inerte.

15. Procédé selon l'une quelconque des revendications 12 à 14, dans lequel la quantité de chloramine est diminuée d'au moins 80 % lors d'une exposition à une solution comprenant 3 ppm de chloramine.
